# EUROPÄISCHE PATENTANMELDUNG

(11) **EP 4 678 424 A1**
(43) Veröffentlichungstag der Anmeldung: **14.01.2026**
(21) Anmeldenummer: 25183758.9
(22) Anmeldetag: 18.06.2025
(51) Int. Cl.: B60C 23/04

(54) **VERFAHREN ZUM EMPFANGEN VON REIFENDATEN**

(30) Priorität: 10.07.2024 DE 102024206511
(71) Anmelder: Continental Reifen Deutschland GmbH, 30175 Hannover (DE)
(72) Erfinder: Jaedicke, Jessica, 30175 Hannover (DE); Sahlmüller, Baldo, 30175 Hannover (DE); Nettelmann, Marc, 30175 Hannover (DE); Groffmann, Lena, 30175 Hannover (DE); Lehmann, Jörg, 30175 Hannover (DE); Mohan, Vipin, 30175 Hannover (DE); James, Akhil, 30175 Hannover (DE)
(74) Vertreter: Continental Corporation

(57) **Zusammenfassung**

Es wird ein Verfahren mit den folgenden Schritten vorgeschlagen:
a) Bereitstellen eines Fahrzeuges (1) mit mindestens einem Fahrzeugreifen mit einem Reifenmodul,
wobei das Reifenmodul eine Sendeeinheit zum Senden von Reifendaten umfasst,
b) Bereitstellen einer Vielzahl von einzelnen Empfangseinheiten (3) zum Empfangen der Reifendaten von den Reifenmodulen und einer zentralen Empfangseinheit (2),
wobei die einzelnen Empfangseinheiten (3) untereinander und mit der zentralen Empfangseinheit (2) über Funkverbindungen miteinander kommunizieren und Daten übermitteln können,
c) Empfangen der Reifendaten mit mindestens einer der Empfangseinheit (3),
d) Weiterleiten der Reifendaten zu der zentralen Empfangseinheit (2) mit einer Funkverbindung,
wobei nur die zentrale Empfangseinheit (2) mit einer Sende- und Empfangseinheit zur Verbindung mit einer Datenbank im Internet ausgestattet ist,
e) Weiterleiten der Reifendaten von der zentralen Empfangseinheit (2) zu einer Datenbank im Internet,
f) Weiterverarbeitung der Reifendaten mit der Datenbank
g) Bereitstellen der Reifendaten für einen Nutzer.

## Beschreibung

Die Erfindung betrifft ein Verfahren zum Empfangen von Reifendaten

Es ist bekannt, bei Fahrzeugreifen eine Reifendrucküberwachung einzusetzen, um einen Druckverlust und andere Parameter des Reifens sicher zu detektieren.

Es existieren am Markt unterschiedliche Systeme von Reifendrucküberwachungen, die auf unterschiedliche Art und Weise mit einem externen Empfangssystem kommunizieren.

Der Erfindung lag die Aufgabe zugrunde, ein Verfahren bereitzustellen, mit dem das Empfangen von Reifendaten wesentlich verbessert wird.

Gelöst wird die Aufgabe durch ein Verfahren mit den folgenden Schritten:
a) Bereitstellen eines Fahrzeuges mit mindestens einem Fahrzeugreifen mit einem Reifenmodul,
   wobei das Reifenmodul eine Sendeeinheit zum Senden von Reifendaten umfasst,
b) Bereitstellen einer Vielzahl von einzelnen Empfangseinheiten zum Empfangen der Reifendaten von den Reifenmodulen und einer zentralen Empfangseinheit, wobei die einzelnen Empfangseinheiten untereinander und mit der zentralen Empfangseinheit über Funkverbindungen miteinander kommunizieren und Daten übermitteln können,
c) Empfangen der Reifendaten mit mindestens einer der Empfangseinheit,
d) Weiterleiten der Reifendaten zu der zentralen Empfangseinheit mit einer Funkverbindung,
   wobei nur die zentrale Empfangseinheit mit einer Sende- und Empfangseinheit zur Verbindung mit einer Datenbank im Internet ausgestattet ist,
e) Weiterleiten der Reifendaten von der zentralen Empfangseinheit zu einer Datenbank im Internet,
f) Weiterverarbeitung der Reifendaten mit der Datenbank
g) Bereitstellen der Reifendaten für einen Nutzer.

Ein Vorteil der Erfindung ist insbesondere darin zu sehen, dass mit dem neuen Verfahren das Empfangen von Reifendaten wesentlich verbessert wird. Bei der herkömmlichen Übertragung von Reifendaten zu einer externen Empfangseinheit wird im Allgemeinen nur eine Empfangseinheit eingesetzt. Bei dem neuen Verfahren werden hingegen eine Vielzahl von einzelnen Empfangseinheiten eingesetzt, die mit einer zentralen Empfangseinheit kommunizieren. Dadurch wird eine höhere Abdeckung für das Empfangen von Reifendaten, die von einzelnen Fahrzeugreifen an einem Fahrzeug gesendet werden, erreicht. Es kann dadurch gewährleistet werden, dass alle oder zu mindestens der Großteil der Reifenmodule eines Fahrzeuges erfasst werden.

In einer vorteilhaften Weiterbildung der Erfindung ist vorgesehen, dass die Reifendaten von der zentralen Empfangseinheit mit einer Mobilfunkverbindung oder WLAN-Verbindung zur Datenbank im Internet übertragen werden. Dadurch kann eine schnelle Übertragung zur Datenbank gewährleistet werden.

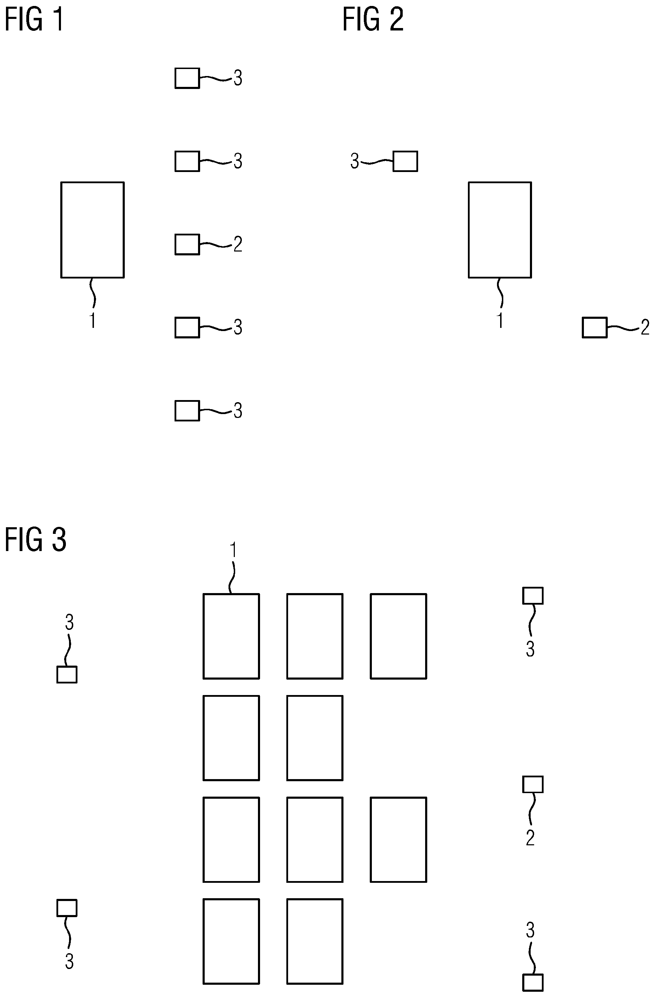

In einer weiteren vorteilhaften Weiterbildung der Erfindung ist vorgesehen, dass die einzelnen Empfangseinheiten entlang eines Weges angeordnet sind, wobei das Fahrzeug entlang des Weges fährt und die Reifendaten der einzelnen Reifenmodule zumindest von einer der Empfangseinheiten erfasst werden. Ein entsprechendes Ausführungsbeispiel ist in der Fig. 1 dargestellt. Das Fahrzeug muss für das Auslesen der Reifenmodule nicht stoppen. Bei dem Weg kann es sich beispielsweise um einen vielbefahrenen Weg auf dem Gelände eines Flottenbetreibers handeln.

In einer weiteren vorteilhaften Weiterbildung der Erfindung ist vorgesehen, dass die Empfangseinheiten an einem Weg oder einem Einfahrtstor angeordnet sind, wobei die zentrale Empfangseinheit auf einer Seite des Fahrzeuges und mindestens eine weitere Empfangseinheit auf der gegenüberliegenden Seite des Fahrzeuges angeordnet sind.

Dadurch wird sichergestellt, dass die Reifenmodule auf beiden Seiten des Fahrzeuges sicher ausgelesen werden können.

In einer weiteren vorteilhaften Weiterbildung der Erfindung ist vorgesehen, dass die Empfangseinheiten und die zentrale Empfangseinheit auf einem Stellplatz für eine Vielzahl von Fahrzeugen angeordnet sind,
wobei die Empfangseinheiten in den Randbereichen oder mittig des Stellplatzes eines Flottenbetreibers positioniert werden können.

Dadurch können die Reifendaten immer dann ausgelesen werden, wenn das Fahrzeug auf dem Stellplatz des Flottenbetreibers geparkt wird.

In einer weiteren vorteilhaften Weiterbildung der Erfindung ist vorgesehen, dass die Empfangseinheiten über eine Hochfrequenz-Verbindung oder eine WiFi-Verbindung miteinander kommunizieren.

Dadurch wird eine schnelle und einfache Übertragung zwischen den Empfangseinheiten gewährleistet.

In einer weiteren vorteilhaften Weiterbildung der Erfindung ist vorgesehen, dass die Reifendaten von einer Empfangseinheiten zu einer anderen Empfangseinheit übertragen werden, wobei damit weite Funkstrecken überbrückt werden. Dadurch wird eine sichere Übertragung der Reifendaten zu der zentralen Empfangseinheit ermöglicht.

In einer weiteren vorteilhaften Weiterbildung der Erfindung ist vorgesehen, dass jede Empfangseinheit und/oder die zentrale Empfangseinheit jeweils mit einem eigenen Stromanschluss ausgestattet ist.

In einer weiteren vorteilhaften Weiterbildung der Erfindung ist vorgesehen, dass jede Empfangseinheit und/oder die zentrale Empfangseinheit mit einem Akku oder Solarzellen mit Akku ausgestattet ist.

Dadurch können die Empfangseinheiten autark, beispielsweise auf einem großen Gelände eines Flottenbetreibers installiert werden. Die einzelnen Positionen für die Empfangseinheiten müssen keine eigene Stromversorgung aufweisen.

Anhand eines Ausführungsbeispiels wird die Erfindung im Folgenden näher beschrieben.

Es zeigt:
- Fig. 1:: Ein erstes Ausführungsbeispiel mit Empfangseinheiten, die entlang eines Weges positioniert sind.
- Fig 2:: Ein zweites Ausführungsbeispiel mit einer Positionierung der Empfangseinheiten an einem Einfahrtstor.
- Fig 3:: Ein weiteres Ausführungsbeispiel, bei dem die Empfangseinheiten auf dem Stellplatz eines Flottenbetreibers positioniert sind.

Die Figur 1 zeigt ein erstes Ausführungsbeispiel.

Das Fahrzeug 1 ist mit einer Vielzahl von Fahrzeugreifen ausgestattet und fährt an einem Weg entlang, an dem eine Vielzahl von einzelnen Empfangseinheiten 3 und eine zentralen Empfangseinheit 2 angeordnet sind. Die zentrale Empfangseinheit 2 ist beispielsweise auf der halben Wegstrecke positioniert. Die anderen 4 Empfangseinheiten 3 sind jeweils davor und danach positioniert.

Das Fahrzeug umfasst eine Vielzahl von Fahrzeugreifen, die jeweils mit einem Reifenmodul ausgestattet sind. Die Reifenmodule sind z.B. auf der Reifeninnenseite befestigt und weisen u.a. einen Drucksensor, einen Temperatursensor und einen Beschleunigungssensor auf.

Die Reifenmodule an den Fahrzeugreifen weisen jeweils eine Sende- und Empfangseinheit auf, mit der die Reifendaten gesendet werden. Einer der dargestellten Empfangseinheiten 3 empfängt die Reifendaten und leitet sie anschließend über eine Funkverbindung an die zentrale Empfangseinheit 2 weiter. Nur die zentrale Empfangseinheit 2 weist eine Sendeeinheit auf, mit der die empfangenen Reifendaten über eine Mobilfunkverbindung an eine Datenbank im Internet weitergeleitet werden können. Die Empfangseinheiten 3 können nur untereinander oder mit der zentralen Empfangseinheit 2 kommunizieren.

Die von der zentralen Empfangseinheit 2 empfangenen Reifendaten werden über eine Mobilfunkverbindung an eine Datenbank im Internet weitergeleitet. Für den Fall, dass z.B. einer der Fahrzeugreifen einen Minderdruck aufweist, erfolgt eine Warnmeldung, die an einen Flottenbetreiber weitergeleitet werden kann.

Die Fig.2 zeigt ein weiteres Ausführungsbeispiel, bei dem das Fahrzeug 1 beispielsweise an einem Einfahrtstor stoppt. Die Reifendaten der Reifenmodule auf der rechten Seite des Fahrzeuges werden von der zentralen Empfangseinheit 2 ausgelesen, die auf der rechten Seite des Fahrzeuges positioniert ist. Auf der gegenüberliegenden Fahrzeugseite ist eine zweite Empfangseinheit positioniert, die es ermöglicht, die Reifendaten der Reifenmodule auf der linken Seite des Fahrzeuges zu empfangen. Die von der Empfangseinheit 3 empfangenen Reifendaten werden zur zentralen Empfangseinheit 2 übertragen. Anschließend werden alle empfangenen Reifendaten zu einer Datenbank im Internet über eine Mobilfunkverbindung weitergeleitet.

Die Fig.3 zeigt ein weiteres Ausführungsbeispiel, bei der eine Vielzahl von Fahrzeugen 1 auf einem Stellplatz von einem Flottenbetreiber geparkt werden. Am Rand des Stellplatzes sind eine Vielzahl von einzelnen Empfangseinheiten 3 und eine zentrale Empfangseinheit 2 positioniert. Die Empfangseinheiten sind so auf dem Stellplatz positioniert, dass sie über eine Funkverbindung alle Reifenmodule der geparkten Fahrzeuge erfassen können. Die Reifendaten werden von den einzelnen Empfangseinheiten zu der zentralen Empfangseinheit 2 übertragen. Anschließend erfolgt eine Übertragung der Reifendaten zu einer Datenbank im Internet.

### Bezugszeichenliste

- 1: Fahrzeug mit Fahrzeugreifen, die mit Reifenmodulen ausgestattet sind
- 2: Zentrale Empfangseinheit
- 3: Empfangseinheit

## Patentansprüche

1. Verfahren zum Empfangen von Reifendaten mit den folgenden Schritten:
a) Bereitstellen eines Fahrzeuges (1) mit mindestens einem Fahrzeugreifen mit einem Reifenmodul,
wobei das Reifenmodul eine Sendeeinheit zum Senden von Reifendaten umfasst,
b) Bereitstellen einer Vielzahl von einzelnen Empfangseinheiten (3) zum Empfangen der Reifendaten von den Reifenmodulen und einer zentralen Empfangseinheit (2),
wobei die einzelnen Empfangseinheiten (3) untereinander und mit der zentralen Empfangseinheit (2) über Funkverbindungen miteinander kommunizieren und Daten übermitteln können,
c) Empfangen der Reifendaten mit mindestens einer der Empfangseinheit (3),
d) Weiterleiten der Reifendaten zu der zentralen Empfangseinheit (2) mit einer Funkverbindung,
wobei nur die zentrale Empfangseinheit (2) mit einer Sende- und Empfangseinheit zur Verbindung mit einer Datenbank im Internet ausgestattet ist,
e) Weiterleiten der Reifendaten von der zentralen Empfangseinheit (2) zu einer Datenbank im Internet,
f) Weiterverarbeitung der Reifendaten mit der Datenbank
g) Bereitstellen der Reifendaten für einen Nutzer.

2. Verfahren nach Anspruch 1,
**dadurch gekennzeichnet, dass**
die Reifendaten von der zentralen Empfangseinheit (2) mit einer Kabel-, Funk- oder Mobilfunkverbindung zur Datenbank im Internet übertragen werden.

3. Verfahren nach einem der vorhergehenden Ansprüche,
**dadurch gekennzeichnet, dass**
die einzelnen Empfangseinheiten (3) entlang eines Weges angeordnet sind, wobei das Fahrzeug entlang des Weges fährt und die Reifendaten der einzelnen Reifenmodule zumindest von einer der Empfangseinheiten (3) erfasst werden.

4. Verfahren nach einem der vorhergehenden Ansprüche,
**dadurch gekennzeichnet, dass**
die Empfangseinheiten (2,3) an einem Weg oder einem Einfahrtstor angeordnet sind,
wobei die zentrale Empfangseinheit (2) auf einer Seite des Fahrzeuges (1) und mindestens eine weitere Empfangseinheit (3) auf der gegenüberliegenden Seite des Fahrzeuges (1) angeordnet sind.

5. Verfahren nach einem der vorhergehenden Ansprüche,
**dadurch gekennzeichnet, dass**
die Empfangseinheiten (3) und die zentrale Empfangseinheit (2) auf einem Stellplatz für eine Vielzahl von Fahrzeugen angeordnet sind,
wobei die Empfangseinheiten (2,3) in den Randbereichen und/oder mittig des Stellplatzes positioniert sind.

6. Verfahren nach einem der vorhergehenden Ansprüche,
**dadurch gekennzeichnet, dass**
die Empfangseinheiten (2,3) über eine Hochfrequenz-Verbindung oder eine WiFi-Verbindung miteinander kommunizieren.

7. Verfahren nach einem der vorhergehenden Ansprüche,
**dadurch gekennzeichnet, dass**
die Reifendaten von einer Empfangseinheiten (3) zu einer anderen Empfangseinheit (3) übertragen werden, wobei damit weite Funkstrecken überbrückt werden.

8. Verfahren nach einem der vorhergehenden Ansprüche,
**dadurch gekennzeichnet, dass**
jede Empfangseinheit (3) und die zentrale Empfangseinheit (2) jeweils mit einem eigenen Stromanschluss ausgestattet sind.

9. Verfahren nach einem der vorhergehenden Ansprüche,
**dadurch gekennzeichnet, dass**
jede Empfangseinheit (3) und/oder die zentrale Empfangseinheit (2) mit einem Akku oder Solarzellen mit Akku ausgestattet sind.

10. Verfahren nach einem der vorhergehenden Ansprüche,
**dadurch gekennzeichnet, dass**
die Reifendaten vom Reifenmodul eine gemessene Temperatur, einen gemessenen Druck, eine gemessene Reifenlast und/oder ermittelte Profiltiefe des Fahrzeugreifens umfassen.
